# EUROPÄISCHE PATENTSCHRIFT

(11) **EP 2 861 885 B1**
(45) Veröffentlichungstag und Bekanntmachung des Hinweises auf die Patenterteilung: **01.06.2016**
(21) Anmeldenummer: 13726576.5
(22) Anmeldetag: 05.06.2013
(51) Int. Cl.: F16D 21/06

(54) **KUPPLUNGSEINRICHTUNG MIT EINER BETÄTIGUNGSEINRICHTUNG**
CLUTCH DEVICE HAVING AN ACTUATING DEVICE
DISPOSITIF D'EMBRAYAGE AVEC DISPOSITIF DE COMMANDE

(30) Priorität: 13.06.2012 DE 102012209930; 29.08.2012 DE 102012215274
(43) Veröffentlichungstag der Anmeldung: 22.04.2015
(73) Patentinhaber: Schaeffler Technologies AG & Co. KG, 91074 Herzogenaurach (DE)
(72) Erfinder: VOGEL, Florian, 77815 Bühl (DE); HELMER, Daniel, 77855 Achern-Fautenbach (DE)
(86) Internationale Anmeldenummer: PCT/EP2013/061601
(87) Internationale Veröffentlichungsnummer: WO 2013/186102

(56) Entgegenhaltungen:
- EP-A2- 2 275 701
- DE-A1- 10 230 090
- GB-A- 191 415 390
- US-A1- 2009 183 963

## Beschreibung

Die Erfindung betrifft eine Kupplungseinrichtung mit einer Betätigungseinrichtung gemäß dem Oberbegriff des Patentanspruchs 1. Insbesondere betrifft die Erfindung eine Kupplungseinrichtung mit einer Betätigungseinrichtung, insbesondere für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits anordenbar ist, die Kupplungseinrichtung und die Betätigungseinrichtung in den Rotor der elektrischen Maschine integriert sind und die Betätigungseinrichtung eine elektrische Wirbelstrombremse mit einem Bremsenstator und einem Bremsenrotor aufweist.

Aus der DE 10 2008 006 062 A1 ist ein Antriebsstrang bekannt in einem Kraftfahrzeug mit einem Verbrennungsmotor und einem Starter-Generator, wobei mittels einer in Öl laufenden Anfahrkupplung die Drehverbindung im Kraftfluss zwischen dem Verbrennungsmotor einerseits, und dem Starter-Generator und dem Getriebe andererseits, hergestellt werden kann, bei dem der Rotor des Starter- Generators - zumindest mittelbar - an einem Kupplungsdeckel gelagert ist und dass der Kupplungsdeckel drehfest und öldicht mit der Kupplungsglocke des Getriebes verbunden ist, um den Antriebsstrang kostengünstiger und platzsparender zu gestalten.

Aus der DE 10 2010 048 830 A1 ist ein Kupplungsaggregat bekannt in einem Antriebsstrang eines Kraftfahrzeugs mit einer Brennkraftmaschine mit einer Kurbelwelle und einem Getriebe mit einer Getriebeeingangswelle mit einer ersten Reibungskupplung enthaltend eine erste Gegendruckplatte und eine axial verlagerbar und drehfest an der ersten Gegendruckplatte aufgenommene erste Anpressplatte, die von einer Tellerfeder gegen die erste Gegendruckplatte unter Zwischenlegung von Reibbelägen einer ersten, mit der Getriebeeingangswelle drehfest verbundenen Kupplungsscheibe verspannt wird, und mit einer zweiten Reibungskupplung enthaltend eine zweite Gegendruckplatte und eine axial verlagerbar und drehfest an der zweiten Gegendruckplatte aufgenommene Anpressplatte, die in Richtung der zweiten Gegendruckplatte unter Zwischenlegung von Reibbelägen einer zweiten, mit der Getriebeeingangswelle verbundenen Kupplungsscheibe verspannbar ist, bei dem die zweite Gegendruckplatte wirksam mit der Kurbelwelle verbunden, die erste Gegendruckplatte auf der zweiten Gegendruckplatte verdrehbar gelagert und zwischen der ersten Gegendruckplatte und der zweiten Anpressplatte eine axial wirksame Rampeneinrichtung angeordnet ist, um eine vergrößerte Kapazität an übertragbarem Moment mit geringer Betätigungskraft bereitzustellen.

Aus der älteren, nicht vorveröffentlichten EP 2 791 530 A1 ist eine Kupplungseinrichtung bekannt mit einer Betätigungseinrichtung für einen Antriebsstrang eines Kraftfahrzeugs aufweisend eine Brennkraftmaschine, eine elektrische Maschine mit einem Stator und einem Rotor und eine Getriebeeinrichtung, wobei die Kupplungseinrichtung in dem Antriebsstrang zwischen der Brennkraftmaschine einerseits und der elektrischen Maschine sowie der Getriebeeinrichtung andererseits angeordnet ist, wobei die Kupplungseinrichtung und die Betätigungseinrichtung in den Rotor der elektrischen Maschine integriert sind, um die Kupplungseinrichtung baulich und/oder funktional zu verbessern.

Zur genaueren Information über die Merkmale der vorliegenden Erfindung wird ausdrücklich auf die Veröffentlichung DE 10 2010 048 830 A1 und auf die EP 2 791 530 A1 verwiesen. Die Lehren dieser Veröffentlichung und dieser Patentanmeldung sind als Bestandteil des vorliegenden Dokuments anzusehen. Merkmale dieser Veröffentlichung und dieser Patentanmeldung sind Merkmale des vorliegenden Dokuments.

Eine Kupplungseinrichtung, die auf den Oberbegriff des Patentanspruchs 1 lesbar ist, ist aus der DE 102 30 090 A1 bekannt.

Der Erfindung liegt die Aufgabe zugrunde, eine eingangs genannte Kupplungseinrichtung baulich und/oder funktional zu verbessern. Insbesondere soll eine Effizienz der Wirbelstrombremse erhöht sein. Insbesondere soll eine Momentkapazität erhöht sein. Insbesondere soll eine Anzahl erforderlicher Magnete verringert sein. Insbesondere soll ein wirksamer Radius zur Erzeugung eines Moments vergrößert sein. Insbesondere soll eine wirksame Magnetfläche vergrößert sein. Insbesondere soll ein magnetischer Fluss innerhalb der Wirbelstrombremse vergrößert sein. Insbesondere soll ein Bremsmoment vergrößert sein.

Erfindungsgemäß gelöst wird diese Aufgabe durch eine Kupplungseinrichtung gemäß Patentanspruch 1. Bevorzugte Ausführungsbeispiele der Erfindung sind in den abhängigen Patentansprüchen dargelegt.

Die Kupplungseinrichtung mit einer Betätigungseinrichtung weist eine elektrische Maschine mit einem Stator und einem Rotor und eine Getriebeeinrichtung auf, wobei die Kupplungseinrichtung in dem Antriebsstrang zwischen der Brennkraftmaschine einerseits und der elektrischen Maschine sowie der Getriebeeinrichtung andererseits anordenbar ist, die Kupplungseinrichtung und die Betätigungseinrichtung in den Rotor der elektrischen Maschine integriert sind und die Betätigungseinrichtung eine elektrische Wirbelstrombremse mit einem Bremsenstator und einem Bremsenrotor aufweist, bei der der Bremsenstator wenigstens einen Elektromagnet mit einer Spule und einem Kern aufweist, wobei die Spule und der Kern zueinander konzentrisch angeordnet sind.

In dem Antriebsstrang können die Brennkraftmaschine, die Kupplungseinrichtung, die elektrische Maschine und die Getriebeeinrichtung in der genannten Reihenfolge angeordnet sein. In dem Antriebsstrang kann ein Drehschwingungsdämpfer, insbesondere ein Zweimassenschwungrad, angeordnet sein. Der Drehschwingungsdämpfer kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Die Bezeichnungen "Eingangsteil" und "Ausgangsteil" sind auf einen von der Brennkraftmaschine ausgehenden Leistungsfluss bezogen. Der Drehschwingungsdämpfer kann in dem Antriebsstrang zwischen der Brennkraftmaschine und der Kupplungseinrichtung angeordnet sein. Der Drehschwingungsdämpfer kann in dem Antriebsstrang zwischen der Brennkraftmaschine und der elektrische Maschine angeordnet sein. Das Eingangsteil des Drehschwingungsdämpfers kann mit der Brennkraftmaschine antriebsverbunden sein. Das Ausgangsteil des Drehschwingungsdämpfers kann mit der Kupplungseinrichtung antriebsverbunden sein. Das Ausgangsteil des Drehschwingungsdämpfers kann mit der elektrischen Maschine antriebsverbunden sein. In dem Antriebsstrang kann wenigstens ein antreibbares Rad angeordnet sein. Das wenigstens eine antreibbare Rad kann in dem Antriebsstrang der Getriebeeinrichtung nachfolgend angeordnet sein.

Das Kraftfahrzeug kann einen Hybridantrieb aufweisen. Das Kraftfahrzeug kann einen ersten Energieumwandler aufweisen. Der erste Energieumwandler kann die Brennkraftmaschine sein. Die Brennkraftmaschine kann mit einem Kohlenwasserstoff, wie Benzin, Diesel, Erdgas (Liquefied Natural Gas, LNG oder Compressed Natural Gas, CNG) oder Autogas (Liquefied Petroleum Gas, LPG) betreibbar sein. Die Brennkraftmaschine kann mit Wasserstoff betreibbar sein. Das Kraftfahrzeug kann einen ersten Energiespeicher aufweisen. Der erste Energiespeicher kann ein Kraftstofftank sein. Das Kraftfahrzeug kann einen zweiten Energieumwandler aufweisen. Der zweite Energieumwandler kann die elektrische Maschine sein. Die elektrische Maschine kann als Elektromotor betreibbar sein. Die elektrische Maschine kann als Generator betreibbar sein. Die elektrische Maschine kann einen Elektromotor und einen Generator baulich vereinigen. Die elektrische Maschine kann ein Starter-Generator sein. Das Kraftfahrzeug kann einen zweiten Energiespeicher aufweisen. Der zweite Energiespeicher kann ein elektrischer Energiespeicher sein. Der zweite Energiespeicher kann ein Akkumulator sein. Der zweite Energiespeicher kann eine Batterie sein. Die Energieumwandler können zum Antrieb des Kraftfahrzeugs dienen. Mithilfe der Energieumwandler kann eine mechanische Leistung erzeugbar sein. Das Kraftfahrzeug kann einen parallelen Hybridantrieb aufweisen. Das Kraftfahrzeug kann einen Vollhybridantrieb aufweisen.

Die Kupplungseinrichtung kann eine Reibungskupplung aufweisen. Die Kupplungseinrichtung kann eine trockene Kupplung aufweisen. Die Kupplungseinrichtung kann eine Einscheibenkupplung aufweisen. Die Kupplungseinrichtung kann eine nasse Kupplung aufweisen. Die Kupplungseinrichtung kann eine Mehrscheibenkupplung aufweisen. Die Kupplungseinrichtung kann eine Lamellenkupplung aufweisen. Die Kupplungseinrichtung kann eine gedrückte Kupplung aufweisen. Die Kupplungseinrichtung kann eine gezogene Kupplung aufweisen. Die Kupplungseinrichtung kann eine Anpressplatte aufweisen. Die Kupplungseinrichtung kann wenigstens eine Zwischendruckplatte aufweisen. Die Kupplungseinrichtung kann eine Druckplatte aufweisen. Die Kupplungseinrichtung kann wenigstens eine Kupplungsscheibe aufweisen. Die wenigstens eine Kupplungsscheibe kann Reibbeläge aufweisen. Es können Zwischendruckplatten und Kupplungsscheiben abwechselnd angeordnet sein. Die wenigstens eine Kupplungsscheibe kann zwischen der Anpressplatte, der wenigstens einen Zwischendruckplatte und/oder der Druckplatte einklemmbar sein.

Die Kupplungseinrichtung kann in dem Antriebsstrang zwischen der Brennkraftmaschine und der elektrischen Maschine angeordnet sein. Die Kupplungseinrichtung kann in dem Antriebsstrang zwischen der Brennkraftmaschine und dem Rotor der elektrischen Maschine angeordnet sein. Die Kupplungseinrichtung kann ein Eingangsteil und ein Ausgangsteil aufweisen. Die Bezeichnungen "Eingangsteil" und "Ausgangsteil", sind auf einen zu einem antreibbaren Rad des Kraftfahrzeugs hin gerichteten Leistungsfluss bezogen. Das Eingangsteil der Kupplungseinrichtung kann die wenigstens eine Kupplungsscheibe aufweisen. Das Eingangsteil der Kupplungseinrichtung kann mit der Brennkraftmaschine antriebsverbunden sein. Das Ausgangsteil der Kupplungseinrichtung kann die Anpressplatte, die wenigstens eine Zwischendruckplatte und/oder die Druckplatte aufweisen. Das Ausgangsteil der Kupplungseinrichtung kann mit der elektrischen Maschine antriebsverbunden sein. Das Ausgangsteil der Kupplungseinrichtung kann mit dem Rotor der elektrischen Maschine antriebsverbunden sein. Die Kupplungseinrichtung kann in dem Antriebsstrang zwischen der Brennkraftmaschine und der Getriebeeinrichtung angeordnet sein. Das Ausgangsteil der Kupplungseinrichtung kann mit der Getriebeeinrichtung antriebsverbunden sein. Das Ausgangsteil der Kupplungseinrichtung kann mit einer Eingangswelle der Getriebeeinrichtung antriebsverbunden sein. Die Kupplungseinrichtung kann in dem Antriebsstrang zwischen dem Drehschwingungsdämpfer und der elektrischen Maschine angeordnet sein. Das Eingangsteil der Kupplungseinrichtung kann mit dem Drehschwingungsdämpfer antriebsverbunden sein. Das Eingangsteil der Kupplungseinrichtung kann mit dem Ausgangsteil des Drehschwingungsdämpfers antriebsverbunden sein. Die Kupplungseinrichtung kann in dem Antriebsstrang zwischen dem Drehschwingungsdämpfer und der Getriebeeinrichtung angeordnet sein.

Die Kupplungseinrichtung kann ausgehend von einer vollständig ausgerückten Betätigungsstellung, in der zwischen dem Eingangsteil und dem wenigstens einen Ausgangsteil im Wesentlichen keine Leistungsübertragung erfolgt, bis hin zu einer vollständig eingerückten Betätigungsstellung, in der zwischen dem Eingangsteil und dem wenigstens einen Ausgangsteil im Wesentlichen eine vollständige Leistungsübertragung erfolgt, betätigungsabhängig eine zunehmende Leistungsübertragung ermöglichen, wobei eine Leistungsübertragung zwischen dem Eingangsteil und dem wenigstens einen Ausgangsteil kraftschlüssig, insbesondere reibschlüssig, erfolgen kann. Umgekehrt kann ausgehend von einer vollständig eingerückten Betätigungsstellung, in der zwischen dem Eingangsteil und dem wenigstens einen Ausgangsteil im Wesentlichen eine vollständige Leistungsübertragung erfolgt, bis hin zu einer vollständig ausgerückten Betätigungsstellung, in der zwischen dem Eingangsteil und dem wenigstens einen Ausgangsteil im Wesentlichen keine Leistungsübertragung erfolgt, betätigungsabhängig eine abnehmende Leistungsübertragung ermöglicht sein. Eine vollständig eingerückte Betätigungsstellung kann eine geschlossene Betätigungsstellung sein. Eine vollständig ausgerückte Betätigungsstellung kann eine offene Betätigungsstellung sein.

Die Kupplungseinrichtung kann einen Momentfühler aufweisen. Der Momentfühler kann an dem Eingangsteil der Kupplungseinrichtung angeordnet sein. Der Momentfühler kann ein Eingangsteil, ein zu dem Eingangsteil relativ verdrehbares Ausgangsteil und wenigstens einen zwischen dem Eingangsteil und dem Ausgangsteil wirksamen Energiespeicher aufweisen. Ein Moment kann aufgrund einer Relativverdrehung zwischen dem Eingangsteil und dem Ausgangsteil entgegen einer Kraft des Energiespeichers erfassbar sein. Mithilfe des Momentfühlers kann eine geregelte Betätigung der Kupplungseinrichtung erfolgen.

Die Getriebeeinrichtung kann eine Eingangswelle und eine Ausgangswelle aufweisen. Die Bezeichnungen "Eingangswelle" und "Ausgangswelle" sind auf einen von der Brennkraftmaschine oder von der elektrischen Maschine ausgehenden Leistungsfluss bezogen. Die Getriebeeinrichtung kann ein Stufengetriebe aufweisen. Die Getriebeeinrichtung kann ein stufenloses Getriebe aufweisen. Die Getriebeeinrichtung kann ein Doppelkupplungsgetriebe aufweisen. Die Getriebeeinrichtung kann ein Wandlerschaltkupplungsgetriebe aufweisen. Die Getriebeeinrichtung kann manuell schaltbar sein. Die Getriebeeinrichtung kann automatisiert schaltbar sein. Die Eingangswelle kann mit der elektrischen Maschine antriebsverbunden sein. Die Eingangswelle kann mit dem Rotor der elektrischen Maschine antriebsverbunden sein. Die Eingangswelle kann mit der Kupplungseinrichtung antriebsverbunden sein. Die Eingangswelle kann mit dem Ausgangsteil der Kupplungseinrichtung antriebsverbunden sein. Die Ausgangswelle kann mit dem wenigstens einen antreibbaren Rad antriebsverbunden sein.

Die elektrische Maschine kann ein Gehäuse aufweisen. Der Stator kann zu dem Gehäuse fest angeordnet sein. Der Stator kann radial außerhalb des Rotors angeordnet sein. Die elektrische Maschine kann wenigstens eine Welle oder Nabe aufweisen. Der Rotor kann an der wenigstens einen Welle oder Nabe fest angeordnet sein. Der Rotor kann radial innerhalb des Stators angeordnet sein. Die elektrische Maschine kann eine erste Welle oder Nabe und eine zweite Welle oder Nabe aufweisen. Die erste Welle oder Nabe und die zweite Welle oder Nabe können koaxial angeordnet sein. Der Rotor kann an der zweiten Welle oder Nabe fest angeordnet sein. Die erste Welle oder Nabe kann dem Eingangsteil der Kupplungseinrichtung zugeordnet sein. Die zweite Welle oder Nabe kann dem Ausgangsteil der Kupplungseinrichtung zugeordnet sein. Der Rotor kann eine hülsenartige Form aufweisen. Der Rotor kann eine rohrabschnittartige Form aufweisen. Der Rotor kann eine hohlzylindrische Form aufweisen. In dem Rotor kann ein Aufnahmeraum gebildet sein.

Eine in den Rotor integrierte Kupplungseinrichtung kann eine Kupplungseinrichtung sein, die zumindest im Wesentlichen innerhalb des Rotors angeordnet ist. Eine in den Rotor integrierte Kupplungseinrichtung kann eine Kupplungseinrichtung sein, die radial zumindest im Wesentlichen innerhalb des Rotors angeordnet ist. Eine radiale Richtung ist eine zu einer Drehachse der elektrischen Maschine senkrechte Richtung. Eine in den Rotor integrierte Kupplungseinrichtung kann eine Kupplungseinrichtung sein, die axial zumindest im Wesentlichen innerhalb des Rotors angeordnet ist. Eine axiale Richtung ist eine Erstreckungsrichtung einer Drehachse der elektrischen Maschine. Eine in den Rotor integrierte Betätigungseinrichtung kann eine Betätigungseinrichtung sein, die zumindest im Wesentlichen innerhalb des Rotors angeordnet ist. Eine in den Rotor integrierte Betätigungseinrichtung kann eine Betätigungseinrichtung sein, die radial zumindest im Wesentlichen innerhalb des Rotors angeordnet ist. Eine in den Rotor integrierte Betätigungseinrichtung kann eine Betätigungseinrichtung sein, die axial zumindest im Wesentlichen innerhalb des Rotors angeordnet ist. Die Kupplungseinrichtung und die Betätigungseinrichtung können abschnittsweise ineinander geschachtelt angeordnet sein. Die Betätigungseinrichtung kann abschnittsweise auf einer der Brennkraftmaschine zugewandten Seite angeordnet sein. Die Kupplungseinrichtung kann abschnittsweise auf einer der Getriebeeinrichtung zugewandten Seite angeordnet sein. Die Betätigungseinrichtung kann abschnittsweise radial innen angeordnet sein. Die Kupplungseinrichtung kann abschnittsweise radial außen angeordnet sein.

Mithilfe der Betätigungseinrichtung kann die Anpressplatte der Kupplungseinrichtung axial verlagerbar sein. Mithilfe der Betätigungseinrichtung kann die Kupplungseinrichtung geöffnet oder geschlossen werden. Mithilfe der Betätigungseinrichtung kann die Kupplungseinrichtung eingerückt oder ausgerückt werden. Die Betätigungseinrichtung kann selbstverstärkend sein. Damit ist eine Schaltung einer vergleichsweise hohen Arbeitsleistung mit einer vergleichsweise geringen Betätigungskraft ermöglicht. Es kann eine Betätigungskraft selbstverstärkt sein. Damit ist eine verringerte Betätigungsenergie erforderlich, um die Kupplungseinrichtung ein- und/oder auszurücken. Es ist eine verringerte Betätigungskraft erforderlich. Es ist ein verringerter Betätigungsweg erforderlich. Ein Aktuator kann eine verringerte Leistung aufweisen. Ein Aktuator kann eine verringerte Leistungsaufnahme aufweisen. Ein Aktuator kann einen verringerten Bauraum aufweisen. Ein Aktuator kann ein verringertes Gewicht aufweisen. Eine Schaltgeschwindigkeit kann erhöht sein.

Die Betätigungseinrichtung kann eine verstellbare Rampeneinrichtung mit ersten Rampen und zweiten Rampen aufweisen. Die Rampeneinrichtung kann durch verdrehen verstellbar sein. Die ersten Rampen und die zweiten Rampen können gegeneinander verdrehbar sein. Eine Verdrehung der ersten Rampen und der zweiten Rampen gegeneinander kann eine Veränderung eines axialen Abstands bewirken. Zwischen den ersten Rampen und den zweiten Rampen können Wälzkörper, insbesondere Kugeln, angeordnet sein. Die Rampen können Laufflächen für die Wälzkörper bilden. Die Rampen können als Wälzkörperrampen, insbesondere als Kugelrampen, ausgebildet sein. Die Rampen können in Umfangsrichtung der Kupplungseinrichtung verteilt angeordnet sein. Die Rampen zu einer zur Drehachse der Kupplungseinrichtung senkrechten Ebene schief sein. Die Rampen können in Umfangsrichtung der Kupplungseinrichtung ansteigen und/oder abfallen. Die Rampen können einseitig ansteigend sein. Die Rampen können beidseitig ansteigend sein. Die ersten Rampen und die zweiten Rampen können zueinander geometrisch komplementär ausgebildet sein. Die ersten Rampen können mit den zweiten Rampen derart korrespondieren, dass sich bei einer Verdrehung der ersten Rampen und der zweiten Rampen gegeneinander die ersten Rampen und die zweiten Rampen in Erstreckungsrichtung der Drehachse der Kupplungseinrichtung voneinander weg oder aufeinander zu bewegen. Die ersten Rampen können die Wälzkörper von radial innen stützen. Die zweiten Rampen können die Wälzkörper von radial außen stützen. Die Wälzkörper können einen derartigen Durchmesser aufweisen, dass sie zwischen den ersten Rampen und den zweiten Rampen verliersicher gehalten sind. Die Wälzkörper können in einem Wälzkörperkäfig angeordnet sein. Damit ist eine Zuordnung der Wälzkörper zu den Rampen gewährleistet.

Die Betätigungseinrichtung kann ein Umlaufrädergetriebe mit einem Hohlrad, einem Sonnenrad, Umlaufrädern und einem Steg aufweisen. Das Umlaufrädergetriebe kann ein Planetengetriebe sein. Das Hohlrad kann eine Innenverzahnung aufweisen. Das Sonnenrad kann eine Außenverzahnung aufweisen. Die Umlaufräder können jeweils eine Außenverzahnung aufweisen. Die Umlaufräder können jeweils mit dem Hohlrad und/oder mit dem Sonnenrad in Eingriff stehen. Das Umlaufrädergetriebe kann eine erste Getriebewelle, eine zweite Getriebewelle und dritte Getriebewelle aufweisen. Das Hohlrad kann an der ersten Getriebewelle angeordnet sein. Das Sonnenrad kann an der zweiten Getriebewelle angeordnet sein. Die Umlaufräder können an den dritten Getriebewellen angeordnet sein. Die erste Getriebewelle und die zweite Getriebewelle können koaxiale Achsen aufweisen. Die Achsen der dritten Getriebewellen können zu den Achsen der ersten Getriebewelle und der zweiten Getriebewelle parallel und von diesen beabstandet sein. Bei einem Betrieb des Umlaufrädergetriebes können die Umlaufräder um das Sonnenrad umlaufen. Der Steg kann ein Umlaufräderträger sein. Der Steg kann die dritten Getriebewellen miteinander fest verbinden oder die dritten Getriebewellen aufweisen.

Die ersten Rampen können dem Hohlrad und die zweiten Rampen können dem Steg zugeordnet sein. Die ersten Rampen können mit dem Hohlrad fest verbunden sein, die zweiten Rampen können mithilfe wenigstens einer Blattfeder mit dem Steg drehfest und axial vorgespannt verbunden sein und der Steg kann mit dem Rotor fest verbunden sein. Die Rampeneinrichtung kann einen ersten Rampenring aufweisen. Der erste Rampenring kann die ersten Rampen aufweisen. Der erste Rampenring kann zunächst baulich gesondert und nachfolgend mit dem Hohlrad verbunden sein. Die ersten Rampen können in das Hohlrad integriert sein. Die ersten Rampen können Abschnitte des Hohlrads sein. Die Rampeneinrichtung kann einen zweiten Rampenring aufweisen. Der zweite Rampenring kann die zweiten Rampen aufweisen. Der zweite Rampenring kann zunächst baulich gesondert und nachfolgend mit dem Steg verbunden sein. Die wenigstens eine Blattfeder kann eine Zugfeder sein. Die wenigstens eine Blattfeder kann eine ringartige Form aufweisen. Die wenigstens eine Blattfeder kann mit dem ersten Rampenring einerseits und mit dem zweiten Rampenring andererseits verbunden sein. Mithilfe der wenigstens einen Blattfeder kann die Rampeneinrichtung mit einer Vorspannkraft beaufschlagt sein. Der Steg kann mit dem Rotor einteilig hergestellt sein. Der Steg und der Rotor können zunächst baulich gesondert hergestellt und nachfolgend miteinander verbunden sein.

Das Umlaufrädergetriebe kann Umlaufradpaare mit ersten Umlaufrädern zur Bildung einer ersten Übersetzung mit dem Sonnenrad und zweiten Umlaufrädern zur Bildung einer zweiten Übersetzung mit dem Hohlrad aufweisen. Es können jeweils ein erstes Umlaufrad und ein zweites Umlaufrad einander zugeordnet sein. Die einander zugeordneten Umlaufräder können zueinander koaxial angeordnet sein. Die einander zugeordneten Umlaufräder können voneinander axial beabstandet sein. Die einander zugeordneten Umlaufräder können miteinander drehfest verbunden sein. Die ersten Umlaufräder können einen größeren Durchmesser als die zweiten Umlaufräder aufweisen. Damit ist eine Übersetzung des Umlaufrädergetriebes vergrößert.

Die Betätigungseinrichtung kann einen Momentfühler zum geregelten Verstellen der Rampeneinrichtung und eine Freilaufeinrichtung aufweisen und der Momentfühler und die Freilaufeinrichtung können in radialer Richtung zumindest abschnittsweise überlappend angeordnet sein. Die Freilaufeinrichtung kann einen Innenring und einen Außenring aufweisen. Die Freilaufeinrichtung kann Klemmkörper aufweisen. Die Klemmkörper können zwischen dem Innenring und dem Außenring wirken. Mithilfe der Freilaufeinrichtung kann ein Verdrehen von Innenring und Außenring relativ zueinander in einer ersten Drehrichtung ermöglicht und in einer zur ersten Drehrichtung entgegengesetzten zweiten Drehrichtung gesperrt sein. Der Innenring kann einer Welle oder Nabe der elektrischen Maschine zugeordnet sein. Der Außenring kann dem Sonnenrad des Umlaufrädergetriebes zugeordnet sein. Damit ist eine Selbstregelung der Betätigungseinrichtung in der vollständig geschlossenen Betätigungsstellung der Kupplungseinrichtung ermöglicht. Es ist ein Schubbetrieb der Brennkraftmaschine ermöglicht. Der Momentfühler kann wenigstens eine Momentfeder, insbesondere schraubenförmige Druckfeder, aufweisen und die Momentfeder und die Freilaufeinrichtung können in radialer Richtung zumindest abschnittsweise überlappend angeordnet sein.

Die Wirbelstrombremse kann Wirbelstromverluste des in Magnetfeldern bewegten Bremsenrotors zur Bremsung nutzen. Die Elektromagnete des Bremsenstators können zur Erzeugung von Magnetfeldern dienen. Der Bremsenrotor kann elektrisch leitfähig sein. Zwischen dem Bremsenstator und dem Bremsenrotor kann ein Luftspalt gebildet sein. Die Wirbelstrombremse kann zum Schließen der Kupplungseinrichtung dienen. Zur Ansteuerung der Wirbelstrombremse kann eine elektrische Steuereinrichtung vorgesehen sein. Mithilfe der Wirbelstrombremse kann das Sonnenrad mit einem einer Drehung des Umlaufrädergetriebes entgegen wirkenden Moment derart beaufschlagbar sein, dass sich das Hohlrad mit den ersten Rampen und der Steg mit den zweiten Rampen relativ zueinander verdrehen. Die Spule kann eine rotationssymmetrische Form aufweisen. Die Spule kann eine Spulenachse aufweisen. Der Kern kann eine rotationssymmetrische Form aufweisen. Der Kern kann eine Kernachse aufweisen. Die Spulenachse und die Kernachse können zumindest annähernd deckungsgleich angeordnet sein.

Bei der erfindungsgemäßen Kupplungseinrichtung ist eine Effizienz der Wirbelstrombremse erhöht. Eine Momentkapazität ist erhöht. Eine Anzahl erforderlicher Magnete ist verringert. Ein wirksamer Radius zur Erzeugung eines Moments ist vergrößert. Eine wirksame Magnetfläche ist vergrößert. Ein magnetischer Fluss innerhalb der Wirbelstrombremse ist vergrößert. Ein Bremsmoment ist durch alternierende magnetische Felder vergrößert.

Die Spule kann eine hohlzylindrische Form aufweisen. Der Kern kann eine topfartige Form mit einem E-förmigen Querschnitt aufweisen. Der Kern kann flachringförmigen Spalt aufweisen. Die Spule kann in dem Kern aufgenommen sein. Die Spule kann in dem Spalt des Kerns aufgenommen sein. Die Spule kann in dem Kern zumindest annähernd vollständig aufgenommen sein. Der Kern kann einen Kernabschnitt aufweisen, der radial innerhalb der Spule angeordnet ist. Der Kern kann einen Wandabschnitt aufweisen, der radial außerhalb der Spule angeordnet ist. Der Kern kann einen Bodenabschnitt aufweisen, der den Spalt einseitig abschließt. Die Spule und der Kern können eine gemeinsame Achse aufweisen, die zu einer Drehachse des Rotors parallel angeordnet ist. Damit kann das Magnetfeld den Bremsenrotor senkrecht durchsetzen.

Der Bremsenstator kann einen Scheibenabschnitt und der wenigstens eine Elektromagnet kann einen Basisabschnitt aufweisen und der Elektromagnet kann mit seinem Basisabschnitt an dem Scheibenabschnitt des Bremsenstators angeordnet sein. Der Scheibenabschnitt kann einen radial äußeren Rand aufweisen. Der Bremsenstator kann einen Nabenabschnitt aufweisen. Der Nabenabschnitt kann ausgehend von dem Scheibenabschnitt zu dem Bremsenrotor hin gerichtet sein. Der wenigstens eine Elektromagnet kann eine zu dem Bremsenrotor hin gerichtete Stirnfläche aufweisen. Die Stirnflächen der Elektromagnete können zumindest annähernd in einer Ebene angeordnet sein. Der Bremsenstator weist mehrere, insbesondere ca. zehn bis ca. vierzehn, insbesondere ca. zwölf, in Umfangsrichtung verteilt angeordnete Elektromagnete auf. Die Elektromagnete können in Umfangsrichtung gleichmäßig verteilt angeordnet sein. Die Elektromagnete können kreisförmig verteilt angeordnet sein. Die Elektromagnete können einen Innenkreis und einen Außenkreis begrenzen. Die Elektromagnete können in radialer Richtung zwischen dem Nabenabschnitt des Bremsenstators und dem radial äußeren Rand des Scheibenabschnitts angeordnet sein.

Der Bremsenrotor kann einen Scheibenabschnitt aufweisen und der Scheibenabschnitt des Bremsenrotors kann den wenigstens einen Elektromagnet in radialer Richtung zumindest annähernd vollständig überdecken. Der Scheibenabschnitt des Bremsenrotors kann einen radial äußeren Rand aufweisen. Der radial äußere Rand des Scheibenabschnitts des Bremsenrotors kann einen Durchmesser aufweisen, der gleich oder größer ist als der von den Elektromagneten begrenzte Außenkreis. Der Scheibenabschnitt des Bremsenrotors und die Ebene der Stirnflächen der Elektromagnete können zueinander zumindest annähernd parallel angeordnet sein. Zwischen dem Scheibenabschnitt des Bremsenrotors und der Ebene der Stirnflächen der Elektromagnete kann ein Luftspalt gebildet sein.

Der Bremsenrotor kann einen Zahnradabschnitt aufweisen und der Zahnradabschnitt kann unmittelbar an dem Scheibenabschnitt des Bremsenrotors angeordnet sein. Der Zahnradabschnitt kann ein Sonnenrad bildet. Der Zahnradabschnitt und der Scheibenabschnitt können einteilig hergestellt sein. Der Zahnradabschnitt und der Scheibenabschnitt können zunächst baulich gesondert hergestellt und nachfolgend miteinander verbunden sein. Damit ist in axialer Richtung ein verringerter Bauraum erforderlich.

Zusammenfassend und mit anderen Worten dargestellt ergibt sich somit durch die Erfindung unter anderem eine rotorintegrierte Kupplung mit elektrischer Betätigung - Wirbelstrombremse mit Topfmagneten. Mit Spulen als Topfmagnete kann eine Effizienz der Wirbelstrombremse erhöht sein. Die Wirbelstrombremse kann mit Topfmagneten aufgebaut sein, die sich auf einem Träger befinden. Dort können sie auf einem Wirkdurchmesser der Wirbelstrombremse rückseitig verschraubt sein. Durch die Art der Magnete ist ein großer Wirkdurchmesser realisierbar. Die Topfmagnete gewährleisten eine einfachere Führung der Magnetfeldlinien. Dadurch ergibt sich eine große magnetische Flussdichte, was zu stärkeren Wirbelströmen in der Scheibe führt.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: einen Antriebsstrang eines Kraftfahrzeugs mit einem parallelen Vollhybridantrieb und einer in dem Antriebsstrang angeordneten Kupplung,
- Fig. 2: eine in einen Rotor einer elektrischen Maschine integrierte Kupplung mit einer Betätigungseinrichtung mit einer Wirbelstrombremse für ein Kraftfahrzeug mit einem Hybridantrieb,
- Fig. 3: eine Wirbelstrombremse mit einem Bremsenstator und einem Bremsenrotor und
- Fig. 4: einen Bremsenstator einer Wirbelstrombremse mit Topfmagneten.

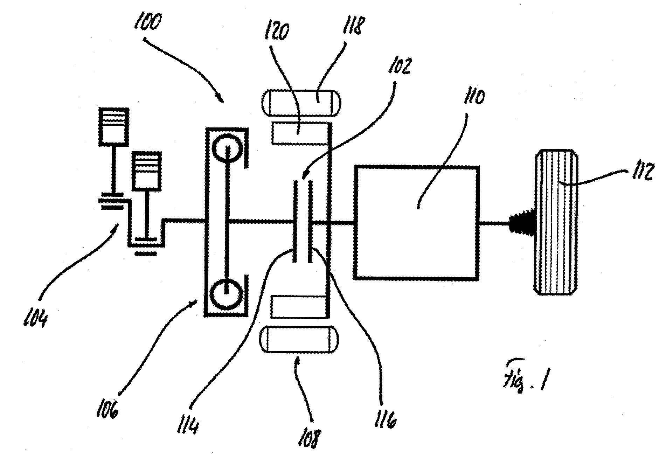

Fig. 1 zeigt einen Antriebsstrang 100 eines hier ansonsten nicht näher dargestellten Kraftfahrzeugs mit einem parallelen Vollhybridantrieb und einer in dem Antriebsstrang 100 angeordneten Kupplung 102. Der Antriebsstrang 100 weist eine Brennkraftmaschine 104, ein Zweimassenschwungrad 106, die Kupplung 102, eine elektrische Maschine 108, ein Getriebe 110 und wenigstens ein antreibbares Rad 112 auf. Die elektrische Maschine 108 ist als Motor betreibbar. Die Kupplung 102 ist in dem Antriebsstrang 100 zwischen dem Zweimassenschwungrad 106 und der elektrischen Maschine 108 angeordnet. Die Kupplung 102 ist in dem Antriebsstrang 100 zwischen dem Zweimassenschwungrad 106 und dem Getriebe 110 angeordnet.

Die Kupplung 102 weist ein Eingangsteil 114 und ein Ausgangsteil 116 auf. Das Eingangsteil 114 der Kupplung 102 ist mit dem Zweimassenschwungrad 106 verbunden. Das Ausgangsteil 116 der Kupplung 102 ist mit der elektrischen Maschine 108 verbunden. Die elektrische Maschine 108 weist einen Stator 118 und einen Rotor 120 auf. Das Ausgangsteil 116 der Kupplung 102 ist mit dem Rotor 120 der elektrischen Maschine 108 verbunden. Das Ausgangsteil 116 der Kupplung 102 ist mit dem Getriebe 110 verbunden. Die elektrische Maschine 108 ist mit dem Getriebe 110 verbunden. Der Rotor 120 der elektrischen Maschine 108 ist mit dem Getriebe 110 verbunden.

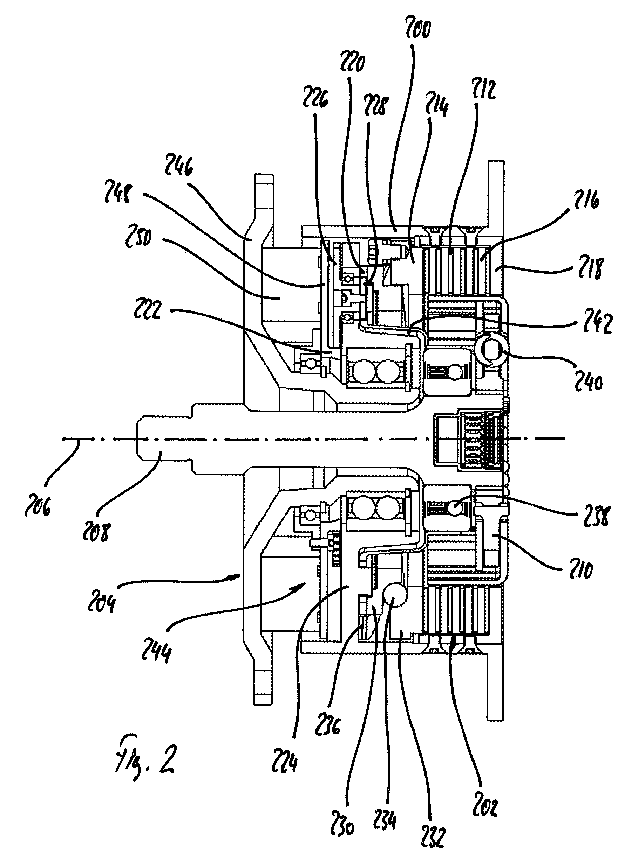

Fig. 2 zeigt eine in einen Rotor 200, wie Rotor 120 gemäß Fig. 1, einer hier ansonsten nicht näher dargestellten elektrischen Maschine, wie elektrische Maschine 108 gemäß Fig. 1, integrierte Kupplung 202, wie Kupplung 102 gemäß Fig. 1, mit einer Betätigungseinrichtung 204 für ein Kraftfahrzeug mit einem Hybridantrieb. Die Kupplung 202 ist in Erstreckungsrichtung der Drehachse 206 sowie in radialer Richtung innerhalb des Rotors 200 angeordnet. Die Betätigungseinrichtung 204 ist in Erstreckungsrichtung der Drehachse 206 sowie in radialer Richtung innerhalb des Rotors 200 angeordnet. Die Kupplung 202 und die Betätigungseinrichtung 204 sind ineinander geschachtelt angeordnet. Die Kupplung 202 ist brennkraftmaschinenseitig angeordnet. Die Betätigungseinrichtung 204 ist getriebeseitig angeordnet.

Die Kupplung 202 weist ein Eingangsteil und ein Ausgangsteil auf. Das Eingangsteil weist eine Welle 208, einen Momentfühler 210 und Kupplungsscheiben, wie 212, auf. Das Ausgangsteil der Kupplung 202 weist eine Anpressplatte 214, Zwischendruckplatten, wie 216, und eine Druckplatte 218 auf. Die Kupplungsscheiben 212 sind drehfest mit der Welle 208 verbunden. Die Anpressplatte 214, die Zwischendruckplatten 216 und die Druckplatte 218 sind drehfest mit dem Rotor 200 verbunden. Die Anpressplatte 214 ist in Erstreckungsrichtung der Drehachse 206 begrenzt axial verlagerbar.

Die Betätigungseinrichtung 204 weist ein Umlaufrädergetriebe mit einem Hohlrad 220, einem Sonnenrad 222, Umlaufrädern und einem Steg 224 auf. Das Hohlrad 220 weist eine Innenverzahnung auf. Das Sonnenrad 222 weist eine Außenverzahnung auf. Die Umlaufräder weisen jeweils eine Außenverzahnung auf. Das Umlaufrädergetriebe weist erste Umlaufräder, wie 226, auf, die mit dem Sonnenrad 222 eine erste Übersetzung bilden. Das Umlaufrädergetriebe weist zweite Umlaufräder, wie 228, auf, die mit dem Hohlrad 220 eine zweite Übersetzung bilden. Es sind jeweils ein erstes Umlaufrad 226 und ein zweites Umlaufrad 228 miteinander drehfest verbunden. Die ersten Umlaufräder 226 weisen jeweils einen größeren Durchmesser auf als die zweiten Umlaufräder 228. Die Umlaufräder 226, 228 sind im Steg 224 gelagert.

Die Betätigungseinrichtung 204 weist eine Rampeneinrichtung mit einem ersten Rampenring 230 und einem zweiten Rampenring 232 auf. Der erste Rampenring 230 weist erste Rampen auf. Der zweite Rampenring 232 weist zweite Rampen auf. Der erste Rampenring 230 und der zweite Rampenring 232 sind relativ zueinander verdrehbar. Zwischen dem ersten Rampenring 230 und dem zweiten Rampenring 232 sind Wälzkörper, wie 234, angeordnet. Eine Verdrehung der Rampenringe 230, 232 relativ zueinander bewirkt eine Abstandsänderung zwischen den Rampenringen 230, 232. Die Rampenringe 230, 232 sind über das Umlaufrädergetriebe miteinander verbunden. Der erste Rampenring 230 ist mit dem Hohlrad 220 fest verbunden. Der zweite Rampenring 232 ist mit dem Steg 224 drehfest und zu dem Steg 224 axial verlagerbar verbunden. Der zweite Rampenring 232 ist mit dem Steg 224 mithilfe ringförmiger Blattfedern, wie 236, verbunden. Die Blattfedern 236 wirken als Zugfedern zwischen dem Steg 224 und dem Rampenring 232. Der Steg 224 ist mit dem Rotor 200 fest verbunden.

Die Betätigungseinrichtung 204 weist den Momentfühler 210 und einen Freilauf 238 auf. Der Momentfühler 210 dient zum geregelten Verstellen der Rampeneinrichtung. Der Momentfühler 210 weist ein Eingangsteil und ein Ausgangsteil auf. Das Eingangsteil des Momentfühlers 210 ist mit der Welle 208 drehfest verbunden. Das Ausgangsteil des Momentfühlers 210 ist mit den Kupplungsscheiben 212 drehfest verbunden. Zwischen dem Eingangsteil und dem Ausgangsteil des Momentfühlers 210 sind Schraubendruckfedern, wie 240, wirksam. Der Freilauf 238 weist einen Innenring und einen Außenring auf. Der Freilauf 238 weist Klemmkörper auf. Der Innenring des Freilaufs 238 ist mit der Welle 208 drehfest verbunden. Der Außenring des Freilaufs 238 ist mit einem hülsenförmigen Bauteil 242 drehfest verbunden, das mit den zweiten Umlaufrädern 228 korrespondiert. Der Momentfühler 210 und der Freilauf 238 sind in Erstreckungsrichtung der Drehachse 206 nebeneinander angeordnet. Der Momentfühler 210 und der Freilauf 238 überdecken sich in radialer Richtung. Die Schraubendruckfedern 240 und der Freilauf 238 überdecken sich in radialer Richtung abschnittsweise. Das Eingangsteil des Momentfühlers 210 und der Innenring des Freilaufs 238 weisen zumindest annähernd gleiche Innendurchmesser auf. Der Momentfühlers 210 und der Freilauf 238 sind in Erstreckungsrichtung der Drehachse 206 innerhalb der Kupplung 202 angeordnet. Der Momentfühler 210 und der Freilauf 238 sind radial innerhalb der Kupplung 202 angeordnet.

Die Betätigungseinrichtung 204 weist eine Wirbelstrombremse 244 auf. Die Wirbelstrombremse 244 weist einen Bremsenstator 246 und einen Bremsenrotor 248 auf. Der Bremsenstator 246 und der Bremsenrotor 248 sind in Erstreckungsrichtung der Drehachse 206 nebeneinander angeordnet. Der Bremsenstator 246 ist brennkraftmaschinenseitig angeordnet. Der Bremsenstator 246 weist mehrere Elektromagnete, wie 250, mit Spule und Kern auf. Der Bremsenstator 246 ist mit dem Rotor 200 fest verbunden. Der Bremsenrotor 248 ist drehfest mit dem Sonnenrad 222 verbunden. Damit kann über das Sonnenrad 222 ein Vorsteuermoment zur Betätigung der Kupplung 202 eingeleitet werden. Das Umlaufrädergetriebe ist so angeordnet, dass das Vorsteuermoment verstärkt wird.

Bei rein elektrischem Fahren ist die Kupplung 202 geöffnet. Hohlrad 220, Steg 224, Umlaufräder 226, 228 und Sonnenrad 222 laufen mit gleicher Drehzahl (E-Motor Drehzahl), das Umlaufrädergetriebe ist sozusagen "verblockt". Dadurch wird ein Verdrehen der Rampenringe 230, 232 und die Betätigung der Kupplung 202 unterbunden. Zusätzlich ist ein Einfluss von Rotationsbeschleunigungen nahezu eliminiert, indem die mit dem Hohlrad 220 rotierenden Bauteile einerseits und die mit dem Sonnenrad 222 rotierenden Bauteile andererseits jeweils in etwa das gleiche Trägheitsmoment aufweisen.

Soll der Verbrennungsmotor nun gestartet werden, wird durch die Wirbelstrombremse 244 auf das Sonnerad 222 ein Vorsteuermoment für die Kupplung 202 erzeugt. Dieses Moment ist ein Bremsmoment und wirkt der ursprünglichen Drehbewegung entgegen. Das Sonnenrad 222 wird relativ zum bisher stehenden Umlaufrädergetriebe verdreht. Über die Funktion des Umlaufrädergetriebes wird das Hohlrad 220 und damit auch der Rampenring 230 relativ zum Steg 224 verdreht, was zugleich einem Verdrehen der Rampeneinrichtung und dem Schließen der Kupplung 202 entspricht.

Das Vorsteuermoment der Wirbelstrombremse 244 wird durch die Übersetzung am Umlaufrädergetriebe und an den Rampenringen 230, 232 so übersetzt, dass die Brennkraftmaschine mit dem geforderten Moment gestartet werden kann. Das Vorsteuermoment kann über die Stromzufuhr an der Wirbelstrombremse 244 exakt gesteuert und in kürzester Zeit aufgebaut werden. Die Startzeit der Brennkraftmaschine beträgt wenige Millisekunden. Durch die hohe Übersetzung des Moments und die kurze Betätigungszeit ergibt sich für das Starten der Brennkraftmaschine eine geringe Betätigungsenergie. Des Weiteren ist die Wirbelstrombremse 244 verschleißfrei und kann über das Magnetfeld der E-Magnete 250 beliebige Zwischenstufen des geforderten Moments, ohne Momentschwankungen und Reibwertabhängigkeiten, realisieren.

Bei laufender Brennkraftmaschine wird das Vorsteuermoment über die Brennkraftmaschine selbst und den Freilauf 238 generiert. Die Welle 208 dient zum Anschluss der Brennkraftmaschine. In diesem Betriebszustand überträgt die Kupplung 202 ein Moment in Zugrichtung. Ein bestimmter Teil dieses Zugmoments wird über den Freilauf 238 als Vorsteuermoment für das Bauteil 242 benutzt. Damit wird die Kupplung 202 durch ein Teil des Moments der Brennkraftmaschine auf die Rampenringe 230, 232 über das Umlaufrädergetriebe betätigt. Die Kupplungsscheiben 212 und werden zwischen der Anpressplatte 214, den Zwischendruckplatten 216 und der Druckplatte 218 eingeklemmt und übertragen das geforderte Moment. Der Verdrehwinkel der Rampenringe 230, 232 wird über den Momentfühler 210 geregelt. Dieser ermöglicht es ebenfalls, dass sich die Kupplung 202 wieder öffnet, sobald kein Moment mehr übertragen wird. Durch diese Anordnung der Bauteile ist die Kupplung 202 in diesem Zustand selbstregelnd und benötigt keine weitere externe Energie zur Betätigung. In diesem Zustand sind Betriebszustände wie Lastverschiebung, Boosten und Fahren mit dem Verbrennungsmotor möglich. Ein Schubbetrieb der Brennkraftmaschine ist dem System ebenfalls möglich. Dabei wird die Wirbelstrombremse 244 im Dauerbetrieb betrieben.

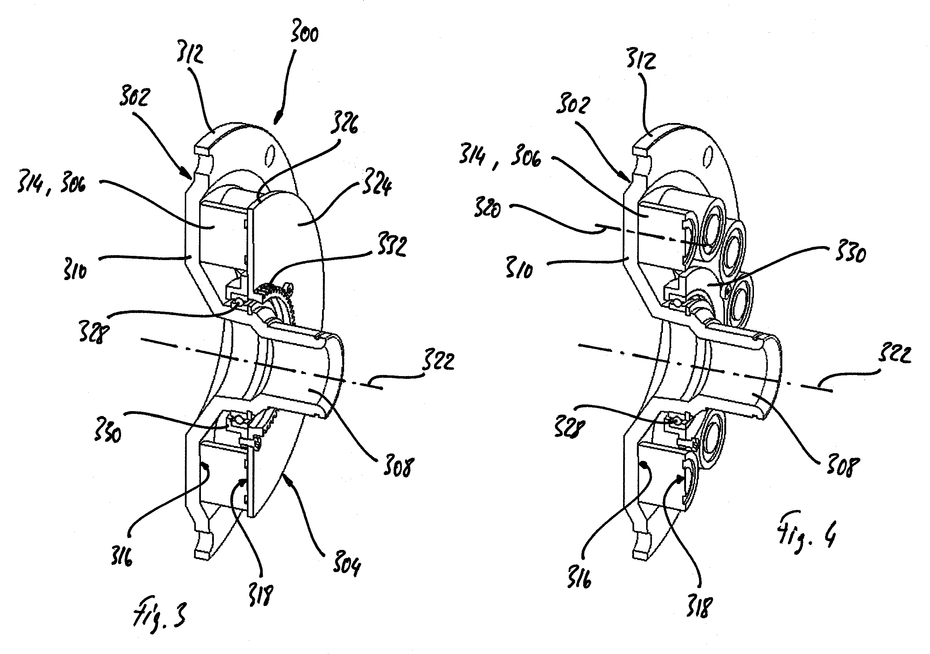

Fig. 3 zeigt eine Wirbelstrombremse 300, wie Wirbelstrombremse 244 gemäß Fig. 2, mit einem Bremsenstator 302 und einem Bremsenrotor 304. Fig. 4 zeigt den Bremsenstator 302 der Wirbelstrombremse 300 mit Topfmagneten, wie 306.

Der Bremsenstator 302 weist einen Nabenabschnitt 308 auf. Der Bremsenstator 302 weist einen Scheibenabschnitt 310 auf. Der Scheibenabschnitt 31 erstreckt sich ausgehend von dem Nabenabschnitt 308 nach radial außen. Der Scheibenabschnitt 310 weist einen radial äußeren Rand 312 auf. An dem Scheibenabschnitt 310 sind Elektromagnete, wie 314, angeordnet. Die Elektromagnete 314 weisen jeweils eine Basis 316 und eine Stirnfläche 318 auf. Die Elektromagnete 314 sind an dem Scheibenabschnitt 310 in Umfangsrichtung gleichmäßig verteilt angeordnet. Vorliegend weist der Bremsenstator 302 zwölf Elektromagnete 314 auf. Die Elektromagnete 314 weisen jeweils eine Achse 320 auf. Die Elektromagnete 314 sind mit ihren Achsen 320 auf einem zu einer Achse 322 des Bremsenstators 302 konzentrischen Mittelkreis angeordnet. Die Elektromagnete 314 begrenzen nach radial außen einen Außenkreis und nach radial innen einen Innenkreis.

Die Elektromagnete 314 weisen jeweils eine Spule und einen Kern auf. Die Kerne weisen jeweils eine topfartige Form mit einem E-artigen Querschnitt auf. Die Kerne weisen jeweils eine flachringförmige Aufnahme für eine Spule auf. Die Spulen weisen jeweils eine hohlzylindrische Form auf. Die Spulen sind jeweils in einer Aufnahme eines Kerns aufgenommen. Die Kerne weisen jeweils einen Kernabschnitt auf, der radial innerhalb einer Spule angeordnet ist. Die Kerne weisen jeweils einen Wandabschnitt auf, der eine Spule radial außenseitig umgibt. Die Kerne weisen jeweils einen Bodenabschnitt auf, der die Aufnahme basisseitig abschließt. Die Elektromagnete 314 sind jeweils mit ihrer Basis 316 mit dem Scheibenabschnitt 310 verschraubt. Die Stirnflächen 318 der Elektromagnete 314 liegen in einer gemeinsamen Ebene.

Der Bremsenrotor 304 weist einen Scheibenabschnitt 324 auf. Der Scheibenabschnitt 324 weist einen radial äußeren Rand 326 auf. Der Scheibenabschnitt 324 des Bremsenrotors 304 überdeckt die Elektromagnete 314 in radialer Richtung derart, dass der Rand 326 radial außerhalb des von den Elektromagneten 314 begrenzen Außenkreises angeordnet ist. Der Scheibenabschnitt 324 des Bremsenrotors 304 ist zu der Ebene der Stirnflächen 318 der Elektromagnete 314 parallel angeordnet. Zwischen dem Bremsenstator 302 und dem Bremsenrotor 304 ist ein Lager 328 angeordnet. Das Lager 328 ist ein Radiallager. Das Lager 328 weist einen Innenring und einen Außenring auf. Der Innenring ist an dem Nabenabschnitt 308 des Bremsenstators 302 angeordnet. Der Bremsenrotor 304 weist ein Gegenstück 330 zur Befestigung an dem Außenring des Lagers 328 auf.

Zwischen den Stirnflächen 318 der Elektromagnete 314 und dem Scheibenabschnitt 324 des Bremsenrotors 304 ist ein geringer Luftspalt gebildet. Der Scheibenabschnitt 324 besteht aus einem elektrisch gut leitenden Material. Mithilfe der Elektromagnete 314 ist ein Magnetfeld erzeugbar. Das Magnetfeld durchsetzt den Scheibenabschnitt 324 des Bremsenrotors 304 im Wesentlichen in Erstreckungsrichtung der Achsen 320.

Der Bremsenrotor 304 weist eine Zahnradabschnitt 332 auf. Der Zahnradabschnitt 332 ist an dem Scheibenabschnitt 324 getriebeseitig angeordnet. Der Zahnradabschnitt 332 bildet ein Sonnenrad eines Umlaufrädergetriebes. Der Scheibenabschnitt 324 und der Zahnradabschnitt 332 sind einstückig hergestellt.

### Bezugszeichenliste

- 100: Antriebsstrang
- 102: Kupplung
- 104: Brennkraftmaschine
- 106: Zweimassenschwungrad
- 108: elektrische Maschine
- 110: Getriebe
- 112: Rad
- 114: Eingangsteil
- 116: Ausgangsteil
- 118: Stator
- 120: Rotor

- 200: Rotor
- 202: Kupplung
- 204: Betätigungseinrichtung
- 206: Drehachse
- 208: Welle
- 210: Momentfühler
- 212: Kupplungsscheibe
- 214: Anpressplatte
- 216: Zwischendruckplatte
- 218: Druckplatte
- 220: Hohlrad
- 222: Sonnenrad
- 224: Steg
- 226: erstes Umlaufrad
- 228: zweites Umlaufrad
- 230: erster Rampenring
- 232: zweiter Rampenring
- 234: Wälzkörper
- 236: Blattfeder
- 238: Freilauf
- 240: Schraubendruckfeder
- 242: Bauteil
- 244: Wirbelstrombremse
- 246: Bremsenstator
- 248: Bremsenrotor
- 250: Elektromagnet

- 300: Wirbelstrombremse
- 302: Bremsenstator
- 304: Bremsenrotor
- 306: Topfmagnet
- 308: Nabenabschnitt
- 310: Scheibenabschnitt
- 312: Rand
- 314: Elektromagnet
- 316: Basis
- 318: Stirnfläche
- 320: Achse
- 322: Achse
- 324: Scheibenabschnitt
- 326: Rand
- 328: Lager
- 330: Gegenstück
- 332: Zahnradabschnitt

## Patentansprüche

1. Kupplungseinrichtung (102, 202) mit einer Betätigungseinrichtung (204), für einen Antriebsstrang (100) eines Kraftfahrzeugs aufweisend eine Brennkraftmaschine (104), eine elektrische Maschine (108) mit einem Stator (118) und einem Rotor (120) und eine Getriebeeinrichtung (110), wobei die Kupplungseinrichtung (102, 202) in dem Antriebsstrang (100) zwischen der Brennkraftmaschine (104) einerseits und der elektrischen Maschine (108) sowie der Getriebeeinrichtung (110) andererseits anordenbar ist, die Kupplungseinrichtung (102, 202) und die Betätigungseinrichtung (204) in den Rotor (120) der elektrischen Maschine (108) integrierbar sind und die Betätigungseinrichtung (204) eine elektrische Wirbelstrombremse (244, 300) mit einem Bremsenstator (246, 302) und einem Bremsenrotor (248, 304) aufweist, wobei der Bremsenstator (246, 302) wenigstens einen Elektromagnet (250, 306, 314) mit einer Spule und einem Kern aufweist, wobei die Spule und der Kern zueinander konzentrisch angeordnet sind, **dadurch gekennzeichnet, dass** der Bremsenstator (246, 302) mehrere in Umfangsrichtung verteilt angeordnete Elektromagnete (250, 306, 314) aufweist.

2. Kupplungseinrichtung (102, 202) nach Anspruch 1, **dadurch gekennzeichnet, dass** die Spule eine hohlzylindrische Form aufweist.

3. Kupplungseinrichtung (102, 202) nach wenigstens einem der vorhergehenden Ansprüche, **dadurch gekennzeichnet, dass** der Kern eine topfartige Form mit einem E-förmigen Querschnitt aufweist.

4. Kupplungseinrichtung (102, 202) nach wenigstens einem der vorhergehenden Ansprüche, **dadurch gekennzeichnet, dass** die Spule in dem Kern aufgenommen ist.

5. Kupplungseinrichtung (102, 202) nach wenigstens einem der vorhergehenden Ansprüche, **dadurch gekennzeichnet, dass** die Spule und der Kern eine gemeinsame Achse (320) aufweisen, die zu einer Drehachse (322) des Rotors (120) parallel angeordnet ist.

6. Kupplungseinrichtung (102, 202) nach wenigstens einem der vorhergehenden Ansprüche, **dadurch gekennzeichnet, dass** der Bremsenstator (246, 302) einen Scheibenabschnitt (310) und der wenigstens eine Elektromagnet (250, 306, 314) einen Basisabschnitt (316) aufweist und der Elektromagnet (250, 306, 314) mit seinem Basisabschnitt (316) an dem Scheibenabschnitt (310) des Bremsenstators (246, 302) angeordnet ist.

7. Kupplungseinrichtung (102, 202) nach wenigstens einem der vorhergehenden Ansprüche, **dadurch gekennzeichnet, dass** der wenigstens eine Elektromagnet (250, 306, 314) eine zu dem Bremsenrotor (248, 304) hin gerichtete Stirnfläche (318) aufweist.

8. Kupplungseinrichtung (102, 202) nach wenigstens einem der vorhergehenden Ansprüche, **dadurch gekennzeichnet, dass** der Bremsenstator (246, 302) zehn bis vierzehn, insbesondere zwölf, in Umfangsrichtung verteilt angeordnete Elektromagnete (250, 306, 314) aufweist.

9. Kupplungseinrichtung (102, 202) nach wenigstens einem der vorhergehenden Ansprüche, **dadurch gekennzeichnet, dass** der Bremsenrotor (248, 304) einen Scheibenabschnitt (324) aufweist und der Scheibenabschnitt (324) des Bremsenrotors (248, 304) den wenigstens einen Elektromagnet (250, 306, 314) in radialer Richtung zumindest annähernd vollständig überdeckt.

10. Kupplungseinrichtung (102, 202) nach Anspruch 9, **dadurch gekennzeichnet, dass** der Bremsenrotor (248, 304) einen Zahnradabschnitt (332) aufweist und der Zahnradabschnitt (332) unmittelbar an dem Scheibenabschnitt (324) des Bremsenrotors (248, 304) angeordnet ist.

## Claims

1. Clutch device (102, 202) having an actuating device (204), for a drive train (100) of a motor vehicle having an internal combustion engine (104), an electric machine (108) with a stator (118) and a rotor (120), and a transmission device (110), for the clutch device (102, 202) being arrangeable in the drive train (100) between the internal combustion engine (104) on one side and the electric machine (108) and the transmission device (110) on the other side, the clutch device (102, 202) and the actuating device (204) being integratable into the rotor (120) of the electric machine (108), and the actuating device (204) having an electric eddy current brake (244, 300) with a brake stator (246, 302) and a brake rotor (248, 304), the brake stator (246, 302) having at least one electromagnet (250, 306, 314) with a coil and a core, the coil and the core being arranged concentrically with respect to one another, **characterized in that** the brake stator (246, 302) has a plurality of electromagnets (250, 306, 314) which are arranged distributed in the circumferential direction.

2. Clutch device (102, 202) according to Claim 1, **characterized in that** the coil has a hollow-cylindrical shape.

3. Clutch device (102, 202) according to at least one of the preceding claims, **characterized in that** the core has a pot-like shape with an E-shaped cross section.

4. Clutch device (102, 202) according to at least one of the preceding claims, **characterized in that** the coil is received in the core.

5. Clutch device (102, 202) according to at least one of the preceding claims, **characterized in that** the coil and the core have a common axis (320) which is arranged parallel to a rotational axis (322) of the rotor (120).

6. Clutch device (102, 202) according to at least one of the preceding claims, **characterized in that** the brake stator (246, 302) has a disc section (310), and the at least one electromagnet (250, 306, 314) has a base section (316), and the electromagnet (250, 306, 314) is arranged with its base section (316) on the disc section (310) of the brake stator (246, 302).

7. Clutch device (102, 202) according to at least one of the preceding claims, **characterized in that** the at least one electromagnet (250, 306, 314) has an end face (318) which is directed towards the brake rotor (248, 304).

8. Clutch device (102, 202) according to at least one of the preceding claims, **characterized in that** the brake stator (246, 302) has from ten to fourteen, in particular twelve, electromagnets (250, 306, 314) which are arranged distributed in the circumferential direction.

9. Clutch device (102, 202) according to at least one of the preceding claims, **characterized in that** the brake rotor (248, 304) has a disc section (324), and the disc section (324) of the brake rotor (248, 304) covers the at least one electromagnet (250, 306, 314) at least approximately completely in the radial direction.

10. Clutch device (102, 202) according to Claim 9, **characterized in that** the brake rotor (248, 304) has a gearwheel section (332), and the gearwheel section (332) is arranged directly on the disc section (324) of the brake rotor (248, 304).

## Revendications

1. Dispositif d'embrayage (102, 202) comprenant un dispositif d'actionnement (204), pour une chaîne cinématique (100) d'un véhicule automobile présentant un moteur à combustion interne (104), un moteur électrique (108) avec un stator (118) et un rotor (120) et un dispositif de transmission (110), le dispositif d'embrayage (102, 202) pouvant être disposé dans la chaîne cinématique (100) entre le moteur à combustion interne (104) d'une part et le moteur électrique (108) ainsi que le dispositif de transmission (110) d'autre part, le dispositif d'embrayage (102, 202) et le dispositif d'actionnement (204) pouvant être intégrés dans le rotor (120) du moteur électrique (108) et le dispositif d'actionnement (204) présentant un frein à courants de Foucault électrique (244, 300) avec un stator de frein (246, 302) et un rotor de frein (248, 304), le stator de frein (246, 302) présentant au moins un électroaimant (250, 306, 314) avec une bobine et un noyau, la bobine et le noyau étant disposés concentriquement l'un par rapport à l'autre, **caractérisé en ce que** le stator de frein (246, 302) présente plusieurs électroaimants (250, 306, 314) disposés de manière répartie dans la direction périphérique.

2. Dispositif d'embrayage (102, 202) selon la revendication 1, **caractérisé en ce que** la bobine présente une forme cylindrique creuse.

3. Dispositif d'embrayage (102, 202) selon au moins l'une quelconque des revendications précédentes, **caractérisé en ce que** le noyau présente une forme de type pot avec une section transversale en forme de E.

4. Dispositif d'embrayage (102, 202) selon au moins l'une quelconque des revendications précédentes, **caractérisé en ce que** la bobine est reçue dans le noyau.

5. Dispositif d'embrayage (102, 202) selon au moins l'une quelconque des revendications précédentes, **caractérisé en ce que** la bobine et le noyau présentent un axe commun (320) qui est disposé parallèlement à un axe de rotation (322) du rotor (120).

6. Dispositif d'embrayage (102, 202) selon au moins l'une quelconque des revendications précédentes, **caractérisé en ce que** le stator de frein (246, 302) présente une portion de disque (310) et l'au moins un électroaimant (250, 306, 314) présente une portion de base (316) et l'électroaimant (250, 306, 314) est disposé avec sa portion de base (316) sur la portion de disque (310) du stator de frein (2 46, 302).

7. Dispositif d'embrayage (102, 202) selon au moins l'une quelconque des revendications précédentes, **caractérisé en ce que** l'au moins un électroaimant (250, 306, 314) présente une surface frontale (318) orientée vers le rotor de frein (248, 304).

8. Dispositif d'embrayage (102, 202) selon au moins l'une quelconque des revendications précédentes, **caractérisé en ce que** le stator de frein (246, 302) présente dix à quatorze, en particulier douze, électroaimants (250, 306, 314) disposés de manière répartie dans la direction périphérique.

9. Dispositif d'embrayage (102, 202) selon au moins l'une quelconque des revendications précédentes, **caractérisé en ce que** le rotor de frein (248, 304) présente une portion de disque (324) et la portion de disque (324) du rotor de frein (248, 304) recouvre l'au moins un électroaimant (250, 306, 314) dans la direction radiale au moins approximativement complètement.

10. Dispositif d'embrayage (102, 202) selon la revendication 9, **caractérisé en ce que** le rotor de frein (248, 304) présente une portion de roue dentée (332) et la portion de roue dentée (332) est disposée directement sur la portion de disque (324) du rotor de frein (248, 304).
